# EUROPÄISCHE PATENTSCHRIFT

(11) **EP 3 319 747 B1**
(45) Veröffentlichungstag und Bekanntmachung des Hinweises auf die Patenterteilung: **02.03.2022**
(21) Anmeldenummer: 16733069.5
(22) Anmeldetag: 28.06.2016
(51) Int. Cl.: B23Q 3/06, B24B 27/00, B24B 41/06, B24B 33/02, B25H 1/18, B25H 1/00, B23B 29/02, B23Q 1/25, B23Q 39/00

(54) **POSITIONIERVORRICHTUNG FÜR EIN ZYLINDERKURBELGEHÄUSE UND HILFSVORRICHTUNG SOWIE VERFAHREN ZUM BEARBEITEN EINES ZYLINDERKURBELGEHÄUSES**
POSITIONING DEVICE FOR A CYLINDER BLOCK AND AUXILIARY DEVICE AND METHOD FOR PROCESSING A CYLINDER BLOCK
DISPOSITIF DE POSITIONNEMENT POUR UN CARTER DE VILEBREQUIN ET DISPOSITIF AUXILIAIRE AINSI QUE PROCÉDÉ POUR L'USINAGE D'UN CARTER DE VILEBREQUIN

(30) Priorität: 06.07.2015 DE 102015212597
(43) Veröffentlichungstag der Anmeldung: 16.05.2018
(73) Patentinhaber: MAG IAS GmbH, 73054 Eislingen (DE)
(72) Erfinder: JENTZSCH, Guido, 74226 Nordheim (DE); BRUDER, Hubert, 77704 Oberkirch (DE)
(74) Vertreter: Rau, Schneck & Hübner Patentanwälte Rechtsanwälte PartGmbB
(86) Internationale Anmeldenummer: PCT/EP2016/064948
(87) Internationale Veröffentlichungsnummer: WO 2017/005540

(56) Entgegenhaltungen:
- DE-A1-102011 011 259
- DE-B3-102013 100 948

## Beschreibung

Die Erfindung betrifft eine Positioniervorrichtung für ein Zylinderkurbelgehäuse. Ferner betrifft die Erfindung eine Hilfsvorrichtung sowie Verfahren zum Bearbeiten eines Zylinderkurbelgehäuses.

Das Bearbeiten von Zylinderkurbelgehäusen ist aufwendig und umfasst insbesondere das Feinbearbeiten der Zylinderbohrungen, der Kurbelwellenbohrung und der Ölwannen-Dichtfläche an der Ölwannenseite. Das Feinbearbeiten der Zylinderbohrungen erfolgt durch Honen mittels eines Honwerkzeugs. Zum Honen der Zylinderbohrungen wird an einer Zylinderkopf-Dichtfläche eine Hilfsvorrichtung befestigt, die auch als Honbrille bezeichnet wird. Durch die Hilfsvorrichtung werden die Steifigkeitsverhältnisse mit montiertem Zylinderkopf nachgebildet, so dass die Zylinderbohrungen durch das Honen die gewünschte Geometrie erhalten, wenn der Zylinderkopf anstelle der Hilfsvorrichtung montiert ist. Das Honen der Zylinderbohrungen mit Hilfe einer Hilfsvorrichtung ist beispielsweise aus der DE 10 2011 011 259 A1 bekannt. Da ein Zylinderkurbelgehäuse an unterschiedlichen Seiten bzw. von unterschiedlichen Seiten bearbeitet werden muss, ist die Positionierung des Zylinderkurbelgehäuses relativ zu den Bearbeitungswerkzeugen aufwendig und erfordert insbesondere unterschiedliche Aufspannungen des Zylinderkurbelgehäuses, um dem jeweiligen Bearbeitungswerkzeug eine geeignete Zugänglichkeit zu dem Zylinderkurbelgehäuse zu ermöglichen.

Aus der DE 10 2013 100 948 B3 ist eine Positioniervorrichtung für ein Zylinderkurbelgehäuse bekannt. Die Positioniervorrichtung umfasst eine Werkstückspannvorrichtung, die an einem verschwenkbaren Werkstückträger befestigt ist. Ein Zylinderkurbelgehäuse wird mittels einer Spanneinheit an der Ölwannenseite gespannt. Mit einem ersten Bearbeitungswerkzeug wird die Kurbelwellenlagerbohrung bearbeitet. Durch Verschwenken des Werkzeugträgers wird eine Bearbeitung der Zylinderbohrungen mittels eines zweiten Bearbeitungswerkzeugs ermöglicht. Hierzu weist der Werkstückträger eine Durchtrittsausnehmung für das zweite Bearbeitungswerkzeug auf.

Der Erfindung liegt die Aufgabe zugrunde, eine Positioniervorrichtung für ein Zylinderkurbelgehäuse zu schaffen, die ein einfaches und wirtschaftliches Bearbeiten von Zylinderkurbelgehäusen ermöglicht. Insbesondere soll die Positioniervorrichtung eine Positionierung und Zugänglichkeit des Zylinderkurbelgehäuses für möglichst viele Bearbeitungsschritte ermöglichen.

Diese Aufgabe wird durch eine Positioniervorrichtung mit den Merkmalen des Anspruchs 1 gelöst. Dadurch, dass das Tragelement der Positioniervorrichtung eine Bearbeitungs-Durchgangsöffnung aufweist, kann ein Bearbeitungswerkzeug bzw. ein Honwerkzeug die mindestens eine Zylinderbohrung durch die Bearbeitungs-Durchgangsöffnung bearbeiten. Hierzu wird das mit der Hilfsvorrichtung bzw. Honbrille verbundene und zu bearbeitende Zylinderkurbelgehäuse derart an dem Tragelement gespannt, dass die Hilfsvorrichtung dem Tragelement zugewandt ist und im Bereich der Bearbeitungs-Durchgangsöffnung angeordnet ist. Zum Bearbeiten der mindestens einen Zylinderbohrung wird das Bearbeitungswerkzeug durch die Bearbeitungs-Durchgangsöffnung und eine zu der mindestens einen Zylinderbohrung gehörige Durchgangsöffnung der Hilfsvorrichtung geführt und in die mindestens eine Zylinderbohrung eingeführt. Dadurch, dass die Hilfsvorrichtung dem Tragelement zugewandt ist, ist eine Ölwannenseite des Zylinderkurbelgehäuses zugänglich, so dass mittels eines weiteren Bearbeitungswerkzeugs eine Ölwannen-Dichtfläche an der Ölwannenseite bearbeitet werden kann. Hierzu wird das Tragelement lediglich um die Schwenkachse verschwenkt werden, so dass die Ölwannenseite dem Bearbeitungswerkzeug zugewandt ist. Durch die Anordnung des mit der Hilfsvorrichtung verbundenen Zylinderkurbelgehäuses ist weiterhin eine Kurbelwellenbohrung des Zylinderkurbelgehäuses zugänglich, so dass mittels eines weiteren Bearbeitungswerkzeugs die Kurbelwellenbohrung bearbeitet werden kann. Hierzu wird das Tragelement um die Schwenkachse verschwenkt, so dass die Kurbelwellenbohrung dem Bearbeitungswerkzeug zugewandt ist. Zum Bearbeiten der mindestens einen Zylinderbohrung, der Ölwannen-Dichtfläche und der Kurbelwellenbohrung muss die Anordnung des mit der Hilfsvorrichtung verbundenen Zylinderkurbelgehäuses an der Positioniervorrichtung bzw. dem Tragelement nicht verändert werden. Das mit der Hilfsvorrichtung verbundene Zylinderkurbelgehäuse wird an dem Tragelement mit mindestens einer Spanneinheit gespannt.

Die Positioniervorrichtung ermöglicht in einfacher Weise das Bearbeiten der Ölwannen-Dichtfläche an der Ölwannenseite des Zylinderkurbelgehäuses. Die mindestens eine Hilfsvorrichtungs-Spanneinheit fixiert das Zylinderkurbelgehäuse mittels der Hilfsvorrichtung an dem Tragelement. Hierzu wirkt die mindestens eine Hilfsvorrichtungs-Spanneinheit mit mindestens einer Spannfläche der Hilfsvorrichtung zusammen. Dadurch, dass die Hilfsvorrichtung mit dem Zylinderkurbelgehäuse verbunden ist, ist auch das Zylinderkurbelgehäuse selbst fixiert. Die Ölwannen-Dichtfläche an der Ölwannenseite des Zylinderkurbelgehäuses liegt hierbei frei und ist in einfacher Weise bearbeitbar. Vorzugsweise sind an dem Tragelement mindestens zwei, insbesondere mindestens drei Hilfsvorrichtungs-Spanneinheiten angeordnet. Die mindestens zwei Hilfsvorrichtungs-Spanneinheiten sind insbesondere an gegenüberliegenden Seiten der Bearbeitungs-Durchgangsöffnung bzw. der Hilfsvorrichtung angeordnet. Zum Bearbeiten der Ölwannen-Dichtfläche ist das Zylinderkurbelgehäuse ausschließlich mittels der mindestens einen Hilfsvorrichtungs-Spanneinheit gespannt. Vorzugsweise liegt das Zylinderkurbelgehäuse auf mindestens einem Auflageelement, das an dem Tragelement angeordnet ist, auf und wird mittels mindestens einer Hilfsvorrichtungs-Spanneinheit gespannt. Vorzugsweise weist die mindestens eine Hilfsvorrichtungs-Spanneinheit ein Spannelement auf, das um eine senkrecht zu der Oberfläche des Tragelements verlaufende Schwenkachse verschwenkbar und in Richtung der Schwenkachse verlagerbar ist.

Die Positioniervorrichtung ermöglicht weiterhin in einfacher Weise das Bearbeiten der mindestens einen Zylinderbohrung und/oder der Kurbelwellenbohrung. Zum Bearbeiten der mindestens einen Zylinderbohrung und/oder der Kurbelwellenbohrung ist das Zylinderkurbelgehäuse ausschließlich an der Ölwannenseite mittels der mindestens einen Zylinderkurbelgehäuse-Spanneinheit gespannt. Vorzugsweise sind an dem Tragelement mindestens zwei, insbesondere mindestens drei, und insbesondere mindestens vier Zylinderkurbelgehäuse-Spanneinheiten angeordnet. Die Zylinderkurbelgehäuse-Spanneinheiten sind vorzugsweise an gegenüberliegenden Seiten der Bearbeitungs-Durchgangsöffnung angeordnet. Vorzugsweise weist die jeweilige Zylinderkurbelgehäuse-Spanneinheit ein Spannelement auf, das um eine senkrecht zu einer Oberfläche des Tragelements verlaufende Schwenkachse verschwenkbar und in Richtung der Schwenkachse verlagerbar ist. Die Hilfsvorrichtungs-Spanneinheit ist zum Bearbeiten der mindestens einen Zylinderbohrung und/oder der Kurbelwellenbohrung geöffnet. Hierdurch wird eine Beeinträchtigung der Bearbeitungsgenauigkeit vermieden. Vorzugsweise liegt das Zylinderkurbelgehäuse auf mindestens einem Auflageelement, das an dem Tragelement angeordnet ist, auf und wird mittels mindestens einer Zylinderkurbelgehäuse-Spanneinheit gespannt.

Vorzugsweise weist die Positioniervorrichtung zwei elektrische Antriebsmotoren auf, die gegenüberliegend an dem Tragelement bzw. beidseitig des Tragelements angeordnet sind. Die Antriebsmotoren sind mit dem Tragelement gekoppelt und bilden eine gemeinsame Schwenkachse aus. Vorzugsweise ist die Positioniervorrichtung derart ausgebildet, dass die Schwenkachse horizontal verläuft. Vorzugsweise ist die Positioniervorrichtung als Schwenkbrücke ausgebildet.

Eine Positioniervorrichtung nach Anspruch 2 ermöglicht in einfacher Weise ein Ausrichten des mit der Hilfsvorrichtung verbundenen Zylinderkurbelgehäuses für das Bearbeiten. Das mindestens eine Ausrichtelement richtet das Zylinderkurbelgehäuse in einer ersten Richtung, die insbesondere parallel zu der Schwenkachse verläuft, und/oder in einer zweiten Richtung, die insbesondere senkrecht zu der ersten Richtung verläuft, aus. Vorzugsweise sind mindestens zwei erste Ausrichtelemente an dem Tragelement angeordnet, die das Zylinderkurbelgehäuse in der ersten Richtung und/oder in der zweiten Richtung ausrichten. Das mindestens eine Ausrichtelement weist vorzugsweise ein sich verjüngendes freies Ende auf, das das Einführen des Zylindergehäuses in eine ausgerichtete Soll-Position vereinfacht. Das mindestens eine Ausrichtelement ist insbesondere an mindestens einem Auflageelement angeordnet. Das mindestens eine Auflageelement dient zum Lagern bzw. Anlegen des Zylinderkurbelgehäuses.

Eine Positioniervorrichtung nach Anspruch 3 ermöglicht in einfacher Weise ein Bearbeiten des Zylinderkurbelgehäuses. Das mindestens eine Auflageelement ermöglicht, dass das Zylinderkurbelgehäuse selbst an dem mindestens einen Auflageelement bzw. an dem Tragelement gelagert ist, so dass die mit dem Zylinderkurbelgehäuse verbundene Hilfsvorrichtung nicht an dem Tragelement aufliegt, sondern frei liegt. Hierdurch wird auf einfache Weise eine genaue Bearbeitung des Zylinderkurbelgehäuses ermöglicht. Vorzugsweise sind an dem Tragelement mindestens drei, insbesondere mindestens vier Auflageelemente angeordnet.

Eine Positioniervorrichtung nach Anspruch 4 gewährleistet ein einfaches Fixieren des Zylinderkurbelgehäuses für die Bearbeitung. Durch das Verlagern des jeweiligen Spannelements senkrecht zu der Oberfläche des Tragelements wird die Hilfsvorrichtung bzw. das Zylinderkurbelgehäuse an dem Tragelement, insbesondere an dem mindestens einen Auflageelement, gespannt. Durch das Verschwenken des jeweiligen Spannelements wird gewährleistet, dass dieses das Zuführen des mit der Hilfsvorrichtung verbundenen Zylinderkurbelgehäuses zu dem Tragelement nicht beeinträchtigt. Beim Zuführen ist das jeweilige Spannelement ausgeschwenkt, so dass das Zuführen ungehindert möglich ist. Anschließend wird das jeweilige Spannelement eingeschwenkt und zum Verspannen in Richtung des Tragelements verlagert. Beim Abführen des mit der Hilfsvorrichtung verbundenen Zylinderkurbelgehäuses wird zunächst das jeweilige Spannelement von dem Tragelement wegverlagert und anschließend ausgeschwenkt, so dass das mit der Hilfsvorrichtung verbundene Zylinderkurbelgehäuse ungehindert abgeführt werden kann.

Eine Positioniervorrichtung nach Anspruch 5 gewährleistet ein einfaches Bearbeiten der Kurbelwellenbohrung. Das Bearbeitungswerkzeug wird durch die Kurbelwellenbohrung geführt und mit seinem freien Ende in die Führungs-Öffnung eingeführt. Beim Bearbeiten der Kurbelwellenbohrung ist das Bearbeitungswerkzeug somit in der Führungs-Öffnung und in der Werkzeugspindel gelagert. Hierdurch wird in einfacher Weise eine hohe Genauigkeit beim Bearbeiten der Kurbelwellenbohrung erzielt. Vorzugsweise ist die Führungs-Öffnung als Führungs-Durchgangsöffnung ausgebildet.

Der Erfindung liegt ferner die Aufgabe zugrunde, eine Hilfsvorrichtung zu schaffen, die ein einfaches und wirtschaftliches Bearbeiten eines Zylinderkurbelgehäuses ermöglicht. Insbesondere soll die Hilfsvorrichtung eine Positionierung und Zugänglichkeit des Zylinderkurbelgehäuses für möglichst viele Bearbeitungsschritte ermöglichen.

Diese Aufgabe wird durch eine Hilfsvorrichtung mit den Merkmalen des Anspruchs 6 gelöst. Dadurch, dass an der Grundplatte mindestens eine Spannfläche ausgebildet ist, ist die Hilfsvorrichtung und ein damit verbundenes Zylinderkurbelgehäuse an einer Positioniervorrichtung fixierbar. Die mindestens eine Spannfläche ist derart angeordnet und ausgebildet, dass diese mit mindestens einer Spanneinheit einer Positioniervorrichtung zusammenwirken kann. Vorzugsweise weist die Grundplatte mindestens zwei Spannflächen auf, die relativ zu der mindestens einen in der Grundplatte ausgebildeten Durchgangsöffnung gegenüberliegend angeordnet sind. Die mindestens eine Spannfläche verläuft vorzugsweise parallel zu einer Anlagefläche der Grundplatte, gegen die ein zu befestigendes Zylinderkurbelgehäuse anliegt. Vorzugsweise umfasst die Grundplatte einen Führungsabschnitt und einen Spannabschnitt. Der Führungsabschnitt weist ebene Seitenflächen auf, die während des Anordnens zum Führen der Hilfsvorrichtung mit mindestens einem Führungselement der Positioniervorrichtung zusammenwirken. In dem Spannabschnitt ist die mindestens eine Spannfläche ausgebildet. Der Führungsabschnitt ist den Befestigungselementen abgewandt, so dass der Spannabschnitt zwischen den Befestigungselementen und dem Führungsabschnitt angeordnet ist. Hierdurch kann die Hilfsvorrichtung oberhalb des Führungsabschnitts an der mindestens einen Spannfläche gespannt werden. Die Hilfsvorrichtung wird an einer Zylinderkopf-Dichtfläche an der Zylinderkopfseite des zu bearbeitenden Zylinderkurbelgehäuses befestigt. Zum Ausrichten der Hilfsvorrichtung relativ zu dem Zylinderkurbelgehäuse weist die Hilfsvorrichtung vorzugsweise Ausrichtelemente auf. Die Hilfsvorrichtung wird auch als Honbrille bezeichnet. Die Hilfsvorrichtung ermöglicht ein einfaches Bearbeiten der Ölwannen-Dichtfläche. Die mindestens eine Spannfläche ist an der Grundplatte seitlich in einfacher Weise ausgebildet. Durch die Ausbildung der mindestens einen Spannfläche mittels mindestens einer Nut ist gewährleistet, dass die mindestens eine Spannfläche durch das Bearbeiten des Zylinderkurbelgehäuses im Wesentlichen durch Verschmutzungen nicht beeinträchtigt wird.

Eine Hilfsvorrichtung nach Anspruch 7 gewährleistet ein einfaches Bearbeiten der Ölwannen-Dichtfläche. Durch die mindestens zwei Spannflächen kann die Hilfsvorrichtung einfach und zuverlässig fixiert werden, so dass das damit verbundene Zylinderkurbelgehäuse an der Ölwannenseite freiliegt und bearbeitet werden kann.

Der Erfindung liegt ferner die Aufgabe zugrunde, eine Werkzeugmaschine zu schaffen, die ein einfaches und wirtschaftliches Bearbeiten eines Zylinderkurbelgehäuses ermöglicht. Insbesondere soll die Werkzeugmaschine die Durchführung möglichst vieler Bearbeitungsschritte ermöglichen. Diese Aufgabe wird durch eine Werkzeugmaschine mit den Merkmalen des Anspruchs 8 gelöst. Die Vorteile der erfindungsgemäßen Werkzeugmaschine entsprechen den bereits beschriebenen Vorteilen der erfindungsgemäßen Positioniervorrichtung. Vorzugsweise weist das Maschinengestell ein Maschinenbett auf, an dem ein Ständer angeordnet ist. An dem Ständer ist die Werkzeugspindel in einer horizontalen x-Richtung und einer vertikalen y-Richtung linear verfahrbar angeordnet. Eine Drehachse der Werkzeugspindel verläuft parallel zu einer horizontalen z-Richtung. Die Positioniervorrichtung ist vorzugsweise in der z-Richtung linear verfahrbar an dem Maschinenbett angeordnet. Die x-, y- und z-Richtungen verlaufen jeweils senkrecht zueinander und bilden ein kartesisches Koordinatensystem. Die Schwenkachse der Positioniervorrichtung verläuft insbesondere parallel zu der x-Richtung. Vorzugsweise ist die Positioniervorrichtung als Schwenkbrücke ausgebildet und weist beidseitig des Tragelements einen elektrischen Antriebsmotor zum Verschwenken auf. Insbesondere kann die Werkzeugmaschine auch zwei Werkzeugspindeln zum parallelen Bearbeiten von zwei Zylinderkurbelgehäusen aufweisen. Die Werkzeugmaschine umfasst vorzugsweise mindestens ein Werkzeugmagazin und mindestens einen Werkzeugwechsler, so dass die jeweilige Werkzeugspindel zum Bearbeiten der mindestens einen Zylinderbohrung, der Kurbelwellenbohrung und/oder der Ölwannen-Dichtfläche mit dem jeweils erforderlichen Bearbeitungswerkzeug automatisch versehen werden kann. Die erfindungsgemäße Werkzeugmaschine ermöglicht insbesondere ein Bearbeiten der mindestens einen Zylinderbohrung, der Kurbelwellenbohrung und der Ölwannen-Dichtfläche, ohne dass die Anordnung des zu bearbeitenden Zylinderkurbelgehäuses an der Positioniervorrichtung verändert werden muss.

An dem Tragelement der Positioniervorrichtung ist insbesondere eine Hilfsvorrichtung nach einem der Ansprüche 6 oder 7 derart angeordnet, dass die mindestens eine Durchgangsöffnung der Hilfsvorrichtung im Bereich der Bearbeitungs-Durchgangsöffnung des Tragelements positioniert ist. Hierdurch kann die mindestens eine Zylinderbohrung des Zylinderkurbelgehäuses durch die Bearbeitungs-Durchgangsöffnung bearbeitet werden. Das Tragelement ist hierzu derart verschwenkt, dass die Bearbeitungs-Durchgangsöffnung der Werkzeugspindel bzw. dem darin gespannten Bearbeitungswerkzeug zugewandt ist. Das Bearbeitungswerkzeug ist zum Bearbeiten der mindestens einen Zylinderbohrung durch die Bearbeitungs-Durchgangsöffnung und die Durchgangsöffnung der Hilfsvorrichtung in die mindestens eine Zylinderbohrung eingeführt. Zum Bearbeiten der Ölwannen-Dichtfläche ist das Zylinderkurbelgehäuse mittels der Hilfsvorrichtung an dem Tragelement fixiert, so dass die zu bearbeitende Ölwannen-Dichtfläche frei liegt.

Der Erfindung liegt ferner die Aufgabe zugrunde, ein Verfahren zu schaffen, das ein einfaches und wirtschaftliches Bearbeiten eines Zylinderkurbelgehäuses ermöglicht. Insbesondere soll das Verfahren die Durchführung möglichst vieler Bearbeitungsschritte ermöglichen.

Diese Aufgabe wird durch ein Verfahren mit den Merkmalen des Anspruchs 9 gelöst. Die Vorteile des erfindungsgemäßen Verfahrens entsprechen den bereits beschriebenen Vorteilen der erfindungsgemäßen Positioniervorrichtung bzw. der erfindungsgemäßen Werkzeugmaschine sowie der erfindungsgemäßen Hilfsvorrichtung. Das Verfahren kann insbesondere auch mit den Merkmalen eines der Ansprüche 1 bis 8 weitergebildet werden. Die Hilfsvorrichtung wird an der Zylinderkopfseite des Zylinderkurbelgehäuses derart befestigt, dass die mindestens eine Durchgangsöffnung mit der zu bearbeitenden mindestens einen Zylinderbohrung fluchtet. Anschließend wird das mit der Hilfsvorrichtung verbundene Zylinderkurbelgehäuse auf dem Tragelement der Positioniervorrichtung derart angeordnet, dass die mindestens eine Durchgangsöffnung im Bereich der Bearbeitungs-Durchgangsöffnung des Tragelements positioniert ist. Die Bearbeitungs-Durchgangsöffnung überdeckt also die mindestens eine Durchgangsöffnung vollständig. Das Bearbeiten der mindestens einen Zylinderbohrung erfolgt mittels eines Bearbeitungswerkzeugs durch die Bearbeitungs-Durchgangsöffnung und die mindestens eine Durchgangsöffnung. Dadurch, dass die Hilfsvorrichtung dem Tragelement der Positioniervorrichtung zugewandt ist, sind die Kurbelwellenbohrung des Zylinderkurbelgehäuses und/oder die Ölwannen-Dichtfläche freiliegend und in einfacher Weise bearbeitbar. Vorzugsweise werden zusätzlich zu der mindestens einen Zylinderbohrung auch die Ölwannen-Dichtfläche und/oder die Kurbelwellenbohrung bearbeitet, ohne dass ein Entfernen des Zylinderkurbelgehäuses von der Positioniervorrichtung und ein Neuanordnen erforderlich sind.

Das Verfahren gewährleistet in einfacher Weise ein Bearbeiten der mindestens einen Zylinderbohrung und/oder der Kurbelwellenbohrung mit einer hohen Bearbeitungsgenauigkeit. Dadurch, dass das zu bearbeitende Zylinderkurbelgehäuse an dem Tragelement bzw. an mindestens einem Auflageelement gelagert und mittels mindestens einer Zylinderkurbelgehäuse-Spanneinheit, insbesondere an der Ölwannenseite gespannt ist, ist das Zylinderkurbelgehäuse an dem Tragelement im Wesentlichen verzugfrei fixiert. Hierdurch ist ein Bearbeiten mit einer hohen Bearbeitungsgenauigkeit möglich. Beim Bearbeiten der mindestens einen Zylinderbohrung und/oder der Kurbelwellenbohrung ist die mit dem Zylinderkurbelgehäuse verbundene Hilfsvorrichtung selbst nicht mittels Spanneinheiten gespannt. Das Zylinderkurbelgehäuse ist also ausschließlich mittels der mindestens einen Zylinderkurbelgehäuse-Spanneinheit gespannt.

Das Verfahren ermöglicht in einfacher Weise ein Bearbeiten der Ölwannen-Dichtfläche an der Ölwannenseite des Zylinderkurbelgehäuses. Hierzu ist die Hilfsvorrichtung mittels mindestens einer Hilfsvorrichtungs-Spanneinheit gespannt, so dass das Zylinderkurbelgehäuse über die Hilfsvorrichtung fixiert ist und die Ölwannenseite freiliegt. Das Zylinderkurbelgehäuse ist somit ausschließlich über die Hilfsvorrichtung fixiert. Das zu bearbeitende Zylinderkurbelgehäuse selbst ist nicht gespannt, um einen Verzug des Zylinderkurbelgehäuses zu vermeiden.

Ein Verfahren nach Anspruch 10 gewährleistet ein einfaches und wirtschaftliches Bearbeiten eines Zylinderkurbelgehäuses. Vorzugsweise wird sowohl die freiliegende Ölwannen-Dichtfläche an der Ölwannenseite als auch die Kurbelwellenbohrung mittels eines jeweils geeigneten Bearbeitungswerkzeugs bearbeitet. Dadurch, dass zum Bearbeiten der Kurbelwellenbohrung das Bearbeitungswerkzeug durch die Kurbelwellenbohrung und eine Führungs-Öffnung eines Führungselements geführt ist, ist das Bearbeitungswerkzeug beidseitig, also in der Führungs-Öffnung und einer Werkzeugspindel gelagert. Hierdurch wird beim Bearbeiten der Kurbelwellenbohrung in einfacher Weise eine hohe Bearbeitungsgenauigkeit erzielt.

Weitere Merkmale, Vorteile und Einzelheiten der Erfindung ergeben sich aus der nachfolgenden Beschreibung mehrerer Ausführungsbeispiele. Es zeigen:
- Fig. 1: eine perspektivische Ansicht einer Werkzeugmaschine mit einer Positioniervorrichtung gemäß einem ersten Ausführungsbeispiel zum Positionieren von zu bearbeitenden Zylinderkurbelgehäusen und mit zugehörigen Hilfsvorrichtungen zum Befestigen an den Zylinderkurbelgehäusen,
- Fig. 2: eine Draufsicht auf die Werkzeugmaschine in Fig. 1,
- Fig. 3: eine perspektivische Ansicht einer Positioniervorrichtung gemäß einem zweiten Ausführungsbeispiel zum Positionieren eines Zylinderkurbelgehäuses,
- Fig. 4: eine Draufsicht auf die Positioniervorrichtung in Fig. 3 zur Veranschaulichung einer in einem Tragelement ausgebildeten Bearbeitungs-Durchgangsöffnung,
- Fig. 5: eine Draufsicht auf die Positioniervorrichtung entsprechend Fig. 4 mit einer im Bereich der Bearbeitungs-Durchgangsöffnung angeordneten Hilfsvorrichtung gemäß den Fig. 6 bis 8 ohne ein an der Hilfsvorrichtung befestigtes Zylinderkurbelgehäuse,
- Fig. 6: eine perspektivische Ansicht einer in Fig. 1 und Fig. 5 dargestellten Hilfsvorrichtung,
- Fig. 7: eine erste Seitenansicht der Hilfsvorrichtung in Fig. 6 mit einer ersten Spannfläche,
- Fig. 8: eine zweite Seitenansicht der Hilfsvorrichtung in Fig. 6 mit einer zweiten Spannfläche,
- Fig. 9: eine perspektivische Ansicht der Positioniervorrichtung gemäß Fig. 3 mit einem an der Hilfsvorrichtung befestigten und an dem Tragelement fixierten Zylinderkurbelgehäuse während der Bearbeitung einer Zylinderbohrung,
- Fig. 10: eine Draufsicht auf eine Ölwannenseite des Zylinderkurbelgehäuses in Fig. 9,
- Fig. 11: eine perspektivische Ansicht der Positioniervorrichtung und des mit der Hilfsvorrichtung verbundenen und an dem Tragelement fixierten Zylinderkurbelgehäuses während der Bearbeitung einer Kurbelwellenbohrung,
- Fig. 12: eine Draufsicht auf die Ölwannenseite des Zylinderkurbelgehäuses in Fig. 11,
- Fig. 13: eine perspektivische Ansicht der Positioniervorrichtung und des mit der Hilfsvorrichtung verbundenen und an dem Tragelement fixierten Zylinderkurbelgehäuses während der Bearbeitung einer Ölwannen-Dichtfläche, und
- Fig. 14: eine Draufsicht auf die Ölwannenseite des Zylinderkurbelgehäuses in Fig. 13.

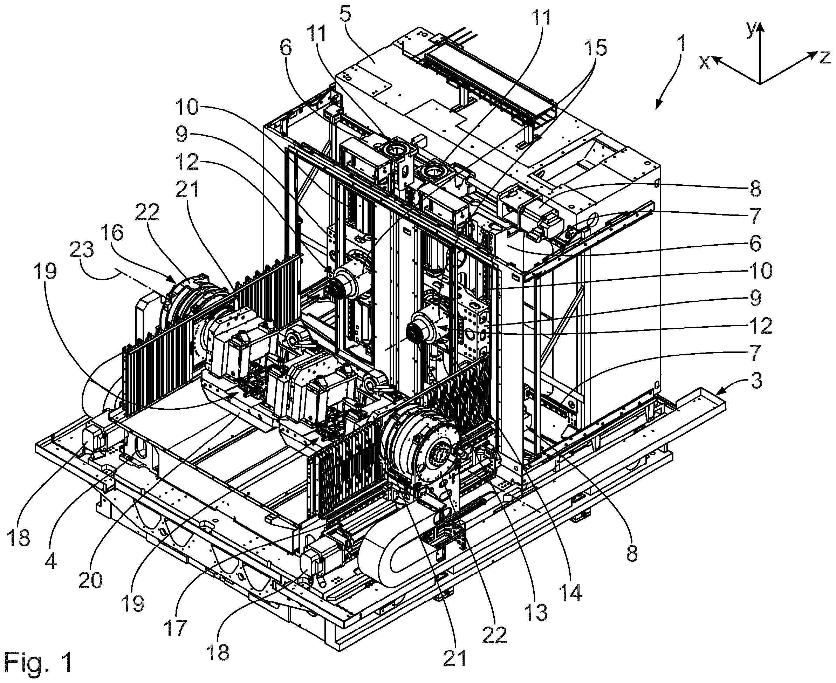

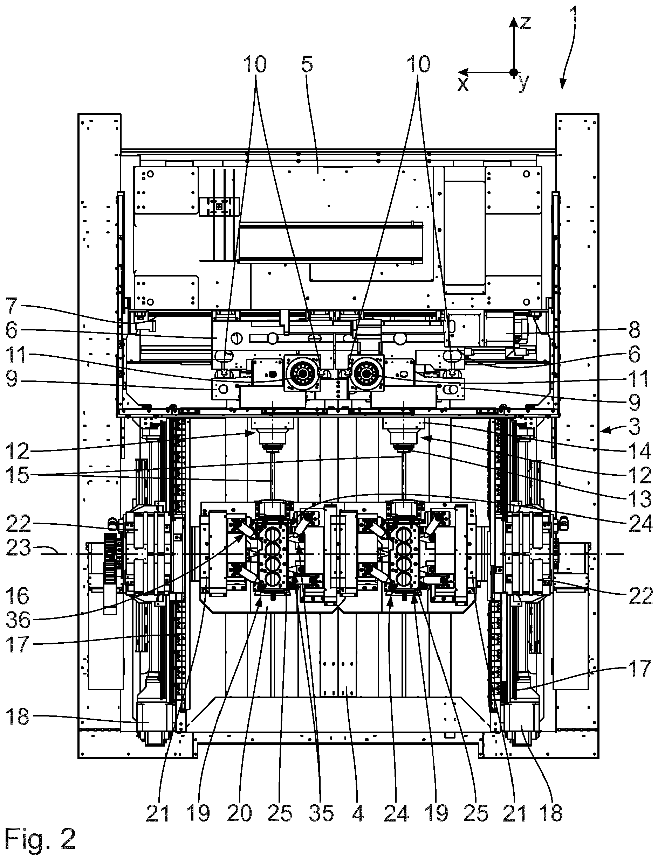

Nachfolgend ist anhand der Fig. 1 und 2 ein erstes Ausführungsbeispiel der Erfindung beschrieben. Eine Werkzeugmaschine 1 zum Bearbeiten von Zylinderkurbelgehäusen 2 weist ein Maschinengestell 3 auf, das durch ein Maschinenbett 4 und einen endseitig daran angeordneten Ständer 5 gebildet ist. Der Ständer 5 erstreckt sich im Wesentlichen in einer horizontalen x-Richtung und einer senkrecht dazu verlaufenden vertikalen y-Richtung, wohingegen sich das Maschinenbett 4 in der horizontalen x-Richtung und einer senkrecht dazu verlaufenden horizontalen z-Richtung erstreckt. Die x-, y- und z-Richtung bilden ein kartesisches Koordinatensystem.

An dem Ständer 5 sind zwei x-Schlitten 6 auf x-Führungsschienen 7 angeordnet und mittels elektrischer x-Antriebsmotoren 8 parallel zu der x-Richtung linear verfahrbar. An den x-Schlitten 6 ist jeweils ein y-Schlitten 9 auf zugehörigen y-Führungsschienen 10 angeordnet und mittels eines zugehörigen elektrischen y-Antriebsmotors 11 parallel zu der y-Richtung linear verfahrbar.

An den y-Schlitten 9 ist jeweils eine Werkzeugspindel 12 angeordnet. Die jeweilige Werkzeugspindel 12 weist eine Werkzeugaufnahme 13 auf, die mittels eines elektrischen Antriebsmotors 14 um eine Drehachse 15 dreh-antreibbar ist. Die jeweilige Drehachse 15 verläuft parallel zu der z-Richtung.

An dem Maschinenbett 4 ist eine Positioniervorrichtung 16 auf z-Führungsschienen 17 angeordnet und mittels elektrischer z-Antriebsmotoren 18 parallel zu der z-Richtung linear verfahrbar. Die Werkzeugmaschine 1 bildet somit drei Linearachsen aus, nämlich aufgrund der verfahrbaren Werkzeugspindeln 12 eine x-Achse und eine y-Achse und aufgrund der verfahrbaren Positioniervorrichtung 16 eine z-Achse.

Die Positioniervorrichtung 16 ist als Schwenkbrücke ausgebildet. Zum Tragen eines mit einer Hilfsvorrichtung 19 verbundenen und zu bearbeitenden Zylinderkurbelgehäuses 2 weist die Positioniervorrichtung 16 ein Tragelement 20 auf, das über endseitig an dem Tragelement 20 angeordnete Verbindungselemente 21 mit elektrischen Antriebsmotoren 22 verbunden ist. Das Tragelement 20 ist mittels der elektrischen Antriebsmotoren 22 um eine Schwenkachse 23 verschwenkbar, die parallel zu der x-Richtung verläuft. Die Schwenkachse 23 wird auch als A-Achse bezeichnet.

Für die parallele Bearbeitung von zwei Zylinderkurbelgehäusen 2 weist die Positioniervorrichtung 16 zwei Bearbeitungsplätze 24 auf, die entlang der Schwenkachse 23 nebeneinander zwischen den elektrischen Antriebsmotoren 22 ausgebildet sind. Die Bearbeitungsplätze 24 sind identisch aufgebaut und jeweils einer Werkzeugspindel 12 zugeordnet. Der Aufbau der Positioniervorrichtung 16 und des jeweiligen Bearbeitungsplatzes 24 sowie das Bearbeiten des jeweiligen Zylinderkurbelgehäuses 2 ist nachfolgend anhand eines zweiten Ausführungsbeispiels im Detail beschrieben. Das vorliegende erste Ausführungsbeispiel unterscheidet sich von dem zweiten Ausführungsbeispiel lediglich durch die Anzahl der Bearbeitungsplätze 24 und die Anzahl der verfahrbaren Werkzeugspindeln 12. Dementsprechend sind die nachfolgenden Ausführungen zu dem zweiten Ausführungsbeispiel auf das erste Ausführungsbeispiel übertragbar.

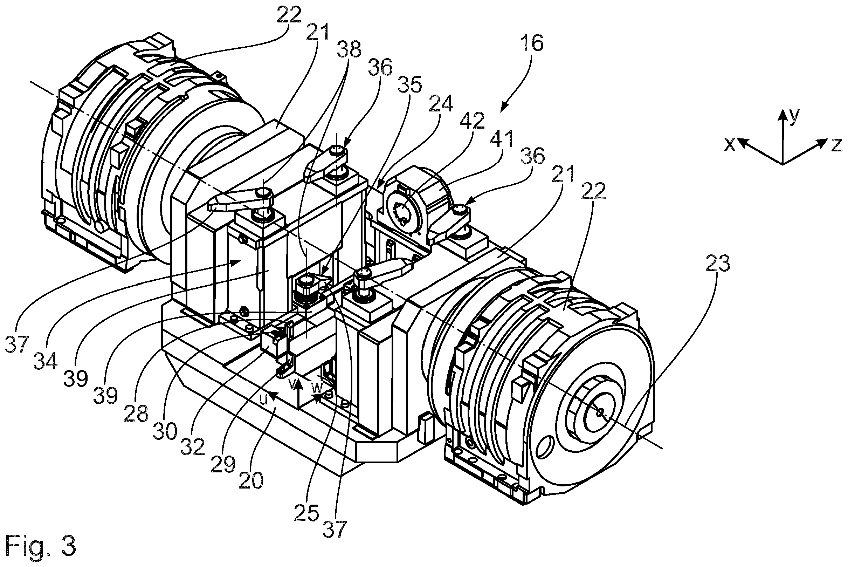

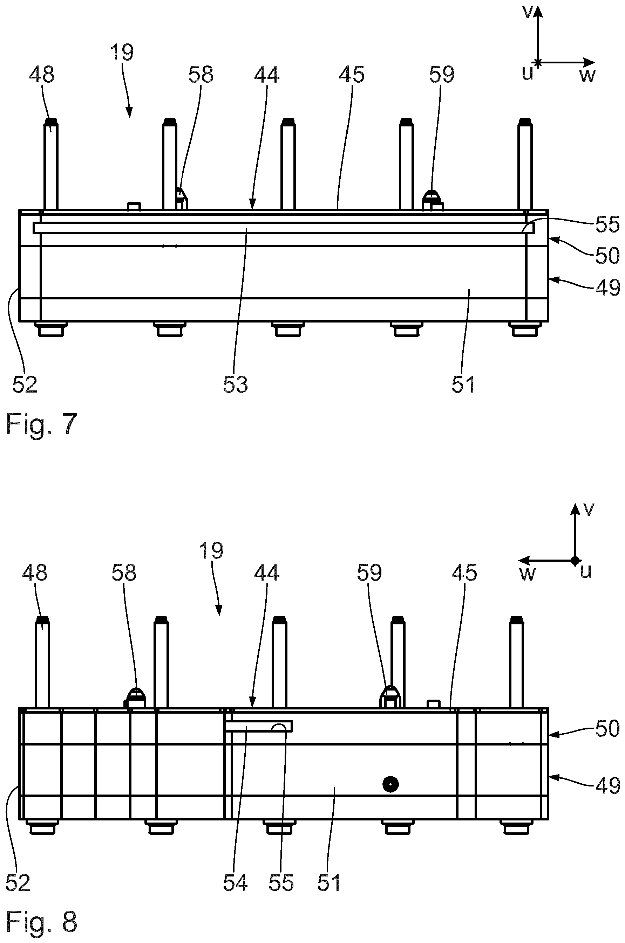

Nachfolgend ist anhand der Fig. 3 bis 14 ein zweites Ausführungsbeispiel der Erfindung beschrieben. Die Positioniervorrichtung 16 weist im Unterschied zu dem ersten Ausführungsbeispiel einen Bearbeitungsplatz 24 für die Bearbeitung eines Zylinderkurbelgehäuses 2 auf. Der Aufbau der Werkzeugmaschine 1 entspricht im Grundsatz dem Aufbau der in den Fig. 1 und 2 dargestellten Werkzeugmaschine 1, wobei die Werkzeugmaschine 1 gemäß dem zweiten Ausführungsbeispiel aufgrund des nur einen Bear-beitungsplatzes 24 auch nur einen x-Schlitten 6 mit einem zugehörigen elektrischen x-Antriebsmotor 8 sowie nur einen auf y-Führungsschienen 10 mittels eines elektrischen y-Antriebsmotors 11 verfahrbaren y-Schlitten 9 und einer daran angeordneten Werkzeugspindel 12 aufweist.

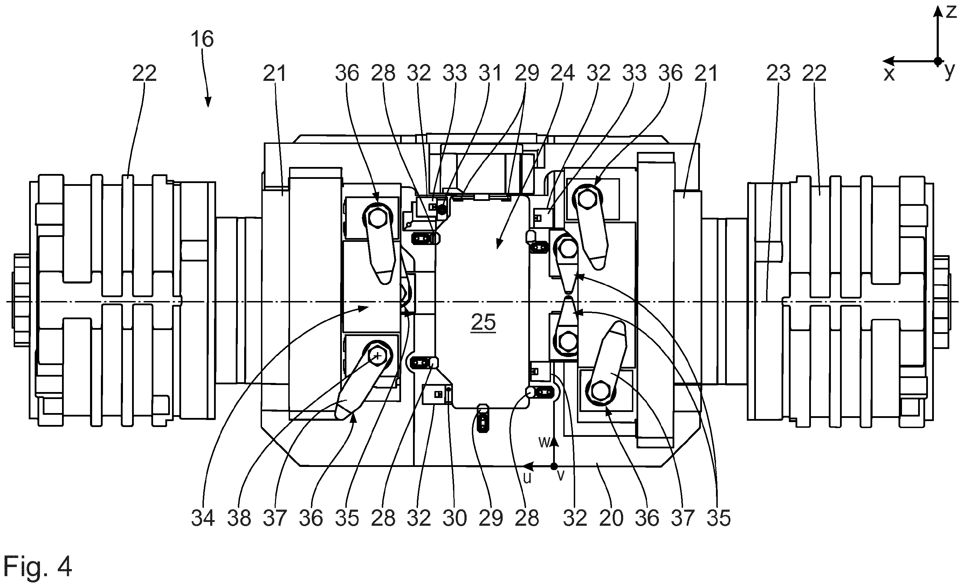

In den Fig. 3 und 4 ist die Positioniervorrichtung 16 ohne ein zu bearbeitendes Zylinderkurbelgehäuse 2 und eine zugehörige Hilfsvorrichtung 19 dargestellt. Die nachfolgenden Ausführungen zu dem Bearbeitungsplatz 24 gelten für die zwei Bearbeitungsplätze 24 des ersten Ausführungsbeispiels jeweils entsprechend.

Zur Ausbildung des Bearbeitungsplatzes 24 weist das Tragelement 20 eine Bearbeitungs-Durchgangsöffnung 25 auf. Die Bearbeitungs-Durchgangsöffnung 25 dient zum Bearbeiten von Zylinderbohrungen 26 des Zylinderkurbelgehäuses 2 mittels eines ersten Bearbeitungswerkzeugs 27. Das erste Bearbeitungswerkzeug 27 ist insbesondere ein Honwerkzeug. Bezogen auf ein relativ zu dem Tragelement 20 ortsfestes Koordinatensystem erstreckt sich die Bearbeitungs-Durchgangsöffnung 25 in einer u- und einer w-Richtung und durchbricht das Tragelement 20 in einer v-Richtung. Die u-, v- und w-Richtung verlaufen jeweils senkrecht zu einander und bilden das zu dem Tragelement 20 ortsfeste Koordinatensystem. Die u-Richtung verläuft parallel zu der Schwenkachse 23 und der x-Richtung.

Zum Anordnen eines mit einer Hilfsvorrichtung 19 verbundenen Zylinderkurbelgehäuses 2 sind an dem Tragelement 20 mehrere u-Führungselemente 28 und mehrere w-Führungselemente 29 befestigt. Die u-Führungselemente 28 sind entlang der u-Richtung an gegenüberliegenden Seiten der Bearbeitungs-Durchgangsöffnung 25 befestigt und dienen während des Anordnens zur Führung der Hilfsvorrichtung 19 in der u-Richtung. Entsprechend sind die w-Führungselemente 29 in der w-Richtung an gegenüberliegenden Seiten der Bearbeitungs-Durchgangsöffnung 25 angeordnet. Die Ausrichtelemente 28, 29 weisen an ihren freien Enden schräg verlaufende Einführflächen auf, so dass die Hilfsvorrichtung 19 einer Soll-Position zugeführt wird.

An dem Tragelement 20 sind weiterhin mehrere Auflageelemente 32 zum Aufliegen des Zylinderkurbelgehäuses 2 angeordnet. Die Auflageelemente 32 sind in der u-Richtung an gegenüberliegenden Seiten der Bearbeitungs-Durchgangsöffnung 25 angeordnet. Die Auflageelemente 32 bilden in der v-Richtung eine jeweilige Auflagefläche 33 aus, wobei die Auflageflächen 33 insbesondere in einer Ebene liegen, die parallel zu einer u-w-Ebene verläuft. Die Auflageflächen 33 liegen in der v-Richtung höher als die Führungselemente 28, 29. Zum Ausrichten des Zylinderkurbelgehäuses 2 sind an den Auflageelementen 32 mehrere Ausrichtelemente 30, 31 angeordnet. Die Ausrichtelemente 30, 31 sind stiftartig ausgebildet und erstrecken sich, insbesondere ausgehend von der jeweiligen Auflagefläche 33, in der v-Richtung. Die Ausrichtelemente 30, 31 verjüngen sich insbesondere in Richtung ihres freien Endes. Die Ausrichtelemente 30, 31 dienen zur Ausrichtung des Zylinderkurbelgehäuses 2 in der u-Richtung und der w-Richtung. In Fig. 4 sind beispielhaft vier Auflageelemente 32 paarweise an gegenüberliegenden Seiten der Bearbeitungs-Durchgangsöffnung 25 angeordnet.

Zum Aufspannen bzw. Fixieren des mit der Hilfsvorrichtung 19 verbundenen Zylinderkurbelgehäuses 2 ist an dem Tragelement 20 eine Spanneinrichtung 34 angeordnet. Die Spanneinrichtung 34 umfasst mehrere Hilfsvorrichtungs-Spanneinheiten 35 und mehrere Zylinderkurbelgehäuse-Spanneinheiten 36. Die Positioniervorrichtung 16 weist beispielhaft drei Hilfsvorrichtungs-Spanneinheiten 35 auf, wobei zwei der Hilfsvorrichtungs-Spanneinheiten in der u-Richtung an einer Seite und eine der Hilfsvorrichtungs-Spanneinheiten 35 an einer gegenüberliegenden Seite der Bearbeitungs-Durchgangsöffnung 25 an dem Tragelement 20 befestigt sind. Die Hilfsvorrichtungs-Spanneinheiten 35 dienen zum Spannen der Hilfsvorrichtung 19. An dem Tragelement 20 sind weiterhin beispielhaft vier Zylinderkurbelgehäuse-Spanneinheiten 36 befestigt, die in der v-Richtung oberhalb der Hilfsvorrichtungs-Spanneinheiten 35 angeordnet sind. Die Zylinderkurbelgehäuse-Spanneinheiten 36 dienen zum Spannen des Zylinderkurbelgehäuses 2 an einer Ölwannenseite. Die Zylinderkurbelgehäuse-Spanneinheiten 36 sind paarweise an in u-Richtung gegenüberliegenden Seiten der Bearbeitungs-Durchgangsöffnung 25 angeordnet.

Die Spanneinheiten 35, 36 weisen jeweils ein Spannelement 37 auf, das parallel zu der Oberfläche des Tragelements 20 bzw. einer u-w-Ebene um eine Schwenkachse 38 verschwenkbar und senkrecht zu der u-w-Ebene linear verlagerbar ist. Das jeweilige Spannelement 37 ist also um die parallel zu der v-Richtung verlaufende Schwenkachse 38 verschwenkbar und entlang der Schwenkachse 38 linear verlagerbar. Zum Verlagern und Verschwenken ist das jeweilige Spannelement 37 mit einer zugehörigen Antriebseinheit 39 gekoppelt. Die Antriebseinheiten 39 sind in Fig. 3 lediglich schematisch dargestellt. Die Antriebseinheiten 39 sind beispielsweise elektromechanisch oder pneumatisch ausgebildet.

Zum Bearbeiten einer Kurbelwellenbohrung 40 des Zylinderkurbelgehäuses 2 ist an dem Tragelement 20 ein Führungselement 41 angeordnet. Das Führungselement 41 weist eine Führungs-Öffnung 42 auf, die zur Aufnahme und Führung eines zweiten Bearbeitungswerkzeugs 43 zum Bearbeiten der Kurbelwellenbohrung 40 dient. Die Führungs-Öffnung 42 ist vorzugsweise als Führungs-Durchgangsöffnung ausgebildet. Die Führungs-Öffnung 42 erstreckt sich parallel zu der w-Richtung.

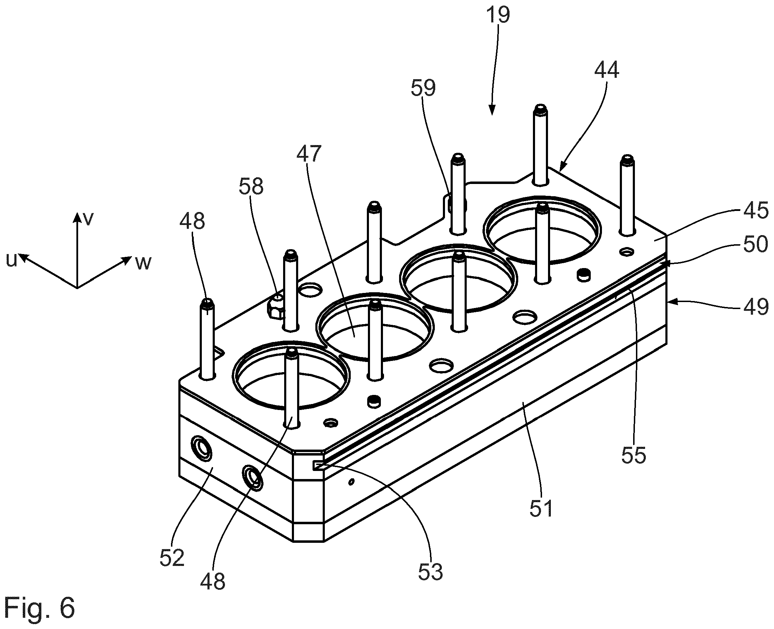

In den Fig. 6 bis 8 ist die Hilfsvorrichtung 19 veranschaulicht. Die Hilfsvorrichtung 19 dient zum Bearbeiten der Zylinderbohrungen 26. Die Hilfsvorrichtung 19 wird auch als Honbrille bezeichnet. Die Hilfsvorrichtung 19 weist eine Grundplatte 44 auf, die bezogen auf das zu dem Tragelement 20 ortsfeste Koordinatensystem, also in einer auf dem Tragelement 20 fixierten Position, eine parallel zu der u-w-Ebene erstreckende Anlagefläche 45 für eine Zylinderkopf-Dichtfläche 46 des Zylinderkurbelgehäuses 2 ausbildet. In der Grundplatte 44 sind entsprechend einer Anzahl an Zylinderbohrungen 26 des zu bearbeitenden Zylinderkurbelgehäuses 2 mehrere Durchgangsöffnungen 47 ausgebildet, die in ihrer Anzahl, Anordnung und Geometrie den zu bearbeitenden Zylinderbohrungen 26 entsprechen. Die Durchgangsöffnungen 47 erstrecken sich ausgehend von der Anlagefläche 45 parallel zu der v-Richtung. An der Grundplatte 44 sind beidseitig der Durchgangsöffnungen 47 mehrere Befestigungselemente 48 befestigt, die sich ausgehend von der Anlagefläche 45 parallel zu der v-Richtung erstrecken. Die Befestigungselemente 48 sind beispielsweise als Gewindestifte ausgebildet. Die Befestigungselemente 48 dienen zur Befestigung der Hilfsvorrichtung 19 an dem Zylinderkurbelgehäuse 2. Zum Ausrichten der Hilfsvorrichtung 19 relativ zu dem Zylinderkurbelgehäuse 2 sind an der Grundplatte 44 Ausrichtelemente 58, 59 befestigt, die sich ausgehend von der Anlagefläche 45 in der v-Richtung erstrecken.

Die Grundplatte 44 bildet in der v-Richtung einen Führungsabschnitt 49 und einen Spannabschnitt 50 aus. In dem Führungsabschnitt 49 weist die Grundplatte 44 seitlich ebene Seitenflächen 51, 52 auf, die zum Führen der Hilfsvorrichtung 19 während des Anordnens an dem Trageelement 20 dienen. In dem Spannabschnitt 50 sind in der u-Richtung seitlich eine erste Nut 53 und eine gegenüberliegende zweite Nut 54 ausgebildet. Die Nuten 53, 54 bilden wiederum jeweils eine Spannfläche 55 aus, die parallel zu der u-w-Ebene verläuft. Die Spannflächen 55 dienen zum Spannen und Fixieren des mit der Hilfsvorrichtung 19 verbundenen Zylinderkurbelgehäuses 2 mittels der Hilfsvorrichtungs-Spanneinheiten 35. Im gespannten Zustand der Hilfsvorrichtung 19 liegen die Spannelemente 37 der Hilfsvorrichtungs-Spanneinheiten 35 gegen die Spannflächen 55 an und wirken mit diesen zusammen. Die Nuten 53, 54 bzw. die Spannflächen 55 sind an relativ zu den Durchgangsöffnungen 47 gegenüberliegenden Seiten der Grundplatte 44 ausgebildet.

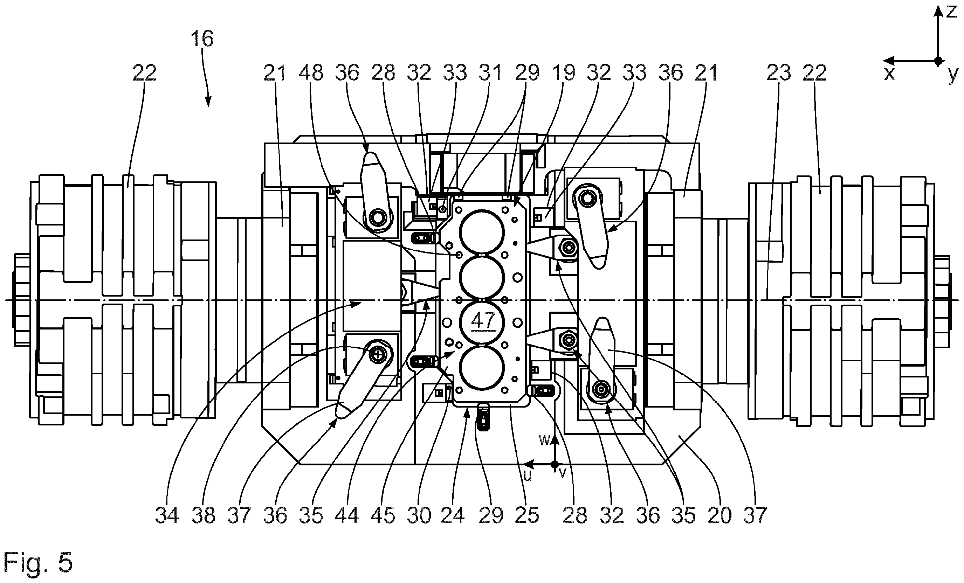

Fig. 5 zeigt zu Veranschaulichungszwecken die Positioniervorrichtung 16 mit der daran angeordneten Hilfsvorrichtung 19, jedoch ohne ein an der Hilfsvorrichtung 19 befestigtes Zylinderkurbelgehäuse 2. Die Hilfsvorrichtung 19 ist mittels der Hilfsvorrichtungs-Spanneinheiten 35 fixiert. Die Hilfsvorrichtung 19 ist derart an dem Tragelement 20 angeordnet, dass die Bearbeitungs-Durchgangsöffnung 25 die Durchgangsöffnungen 47 und insbesondere die gesamte Grundplatte 44 überdeckt. Die Hilfsvorrichtung 19 selbst liegt somit nicht auf dem Tragelement 20 auf und ist durch die Bearbeitungs-Durchgangsöffnung 25 frei zugänglich.

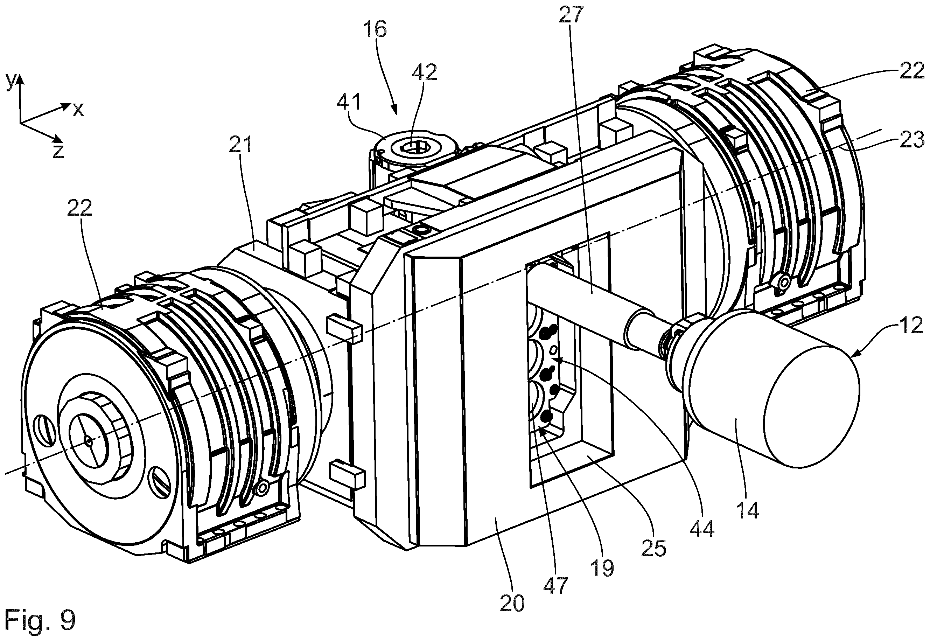

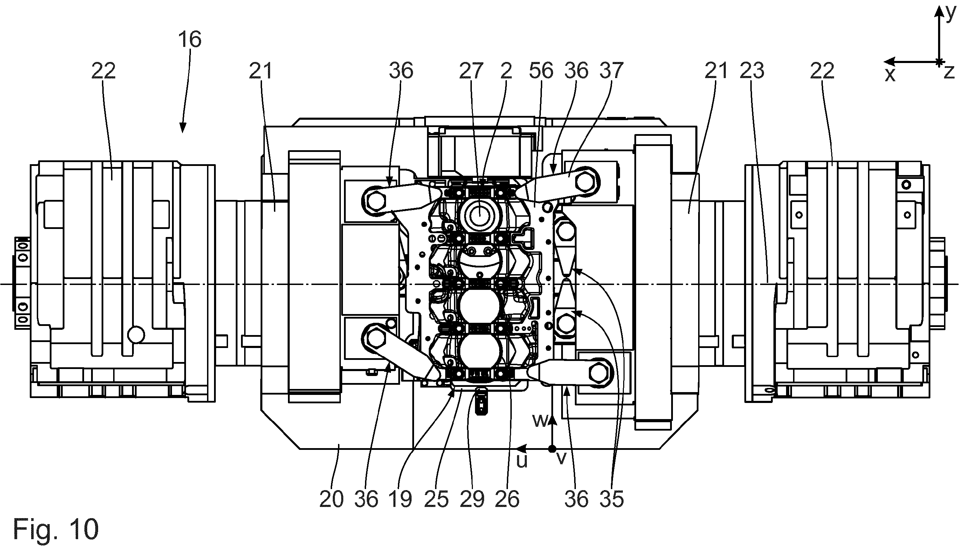

In den Fig. 9 und 10 ist das Bearbeiten der Zylinderbohrungen 26 veranschaulicht. Das zu bearbeitenden Zylinderkurbelgehäuse 2 liegt mit der Zylinderkopf-Dichtfläche 46 gegen die Anlagefläche 45 der Grundplatte 44 an und ist mittels der Befestigungselemente 48 mit der Hilfsvorrichtung 19 verbunden. Die Hilfsvorrichtung 19 ist derart an dem Zylinderkurbelgehäuse 2 angeordnet und ausgerichtet, dass die Durchgangsöffnungen 47 in Deckung mit den Zylinderbohrungen 26 sind. Das Zylinderkurbelgehäuse 2 liegt an den Auflageflächen 33 der Auflageelemente 32 auf, wobei das Zylinderkurbelgehäuse 2 in der u- und der v-Richtung über die Ausrichtelemente 30, 31 ausgerichtet ist. Das mit der Hilfsvorrichtung 19 verbundene Zylinderkurbelgehäuse 2 ist über die Zylinderkurbelgehäuse-Spannelemente 36 an dem Tragelement 20 fixiert. Hierzu sind die Spannelemente 37 eingeschwenkt und liegen gegen eine Ölwannen-Dichtfläche 56 des Zylinderkurbelgehäuses 2 an. Die Spannelemente 37 drücken das Zylinderkurbelgehäuse 2 in der v-Richtung gegen die Auflageelemente 32. Die Spannelemente 37 der Hilfsvorrichtungs-Spanneinheiten 35 sind gelöst und ausgeschwenkt.

Zum Bearbeiten der Zylinderbohrungen 26 ist das Tragelement 20 mittels der Antriebsmotoren 22 derart um die Schwenkachse 23 verschwenkt, dass die Bearbeitungs-Durchgangsöffnung 25 der Werkzeugspindel 12 und dem darin aufgenommenen Bearbeitungswerkzeug 27 zugewandt ist. Das Bearbeitungswerkzeug 27 wird mittels der Werkzeugspindel 12 drehangetrieben und mittels der Schlitten 6, 9 in x- und y-Richtung zu der zu bearbeitenden Zylinderbohrung 26 positioniert. Durch Verfahren der Positioniervorrichtung 16 in der z-Richtung wird das Bearbeitungswerkzeug 27 durch die Bearbeitungs-Durchgangsöffnung 25 und die Durchgangsöffnung 47 in die Zylinderbohrung 26 eingeführt. Das Bearbeitungswerkzeug 27 bearbeitet die Innenwand der Zylinderbohrung 26 in bekannter Weise. Das Bearbeiten der weiteren Zylinderbohrungen 26 erfolgt entsprechend.

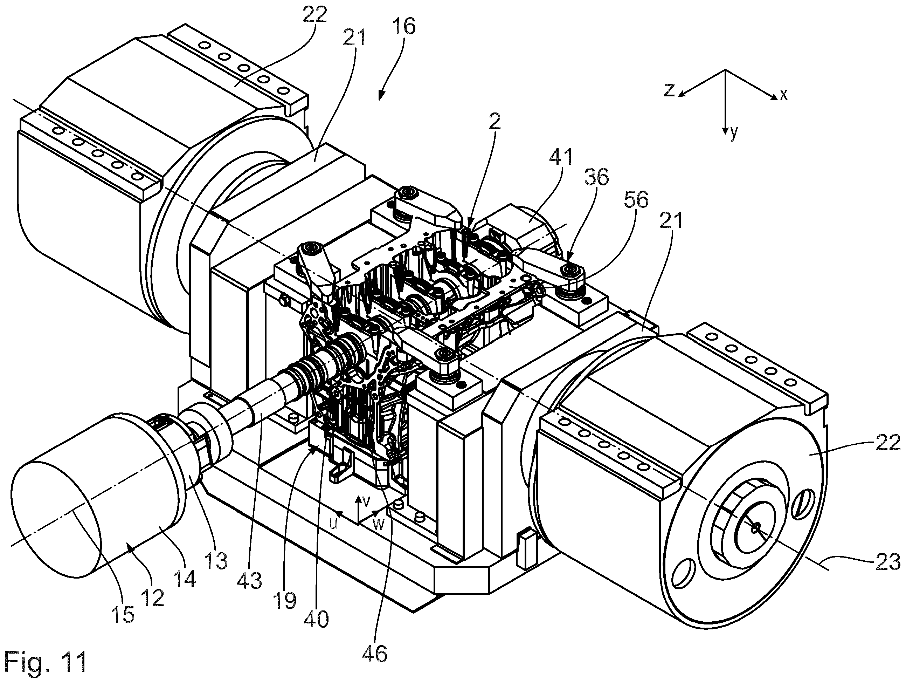

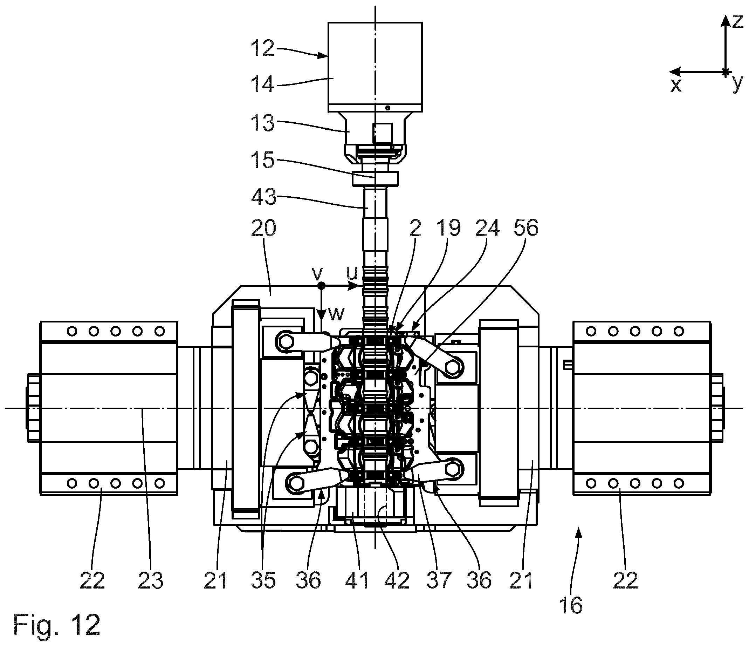

In den Fig. 11 und 12 ist das Bearbeiten der Kurbelwellenbohrung 40 veranschaulicht. Das mit der Hilfsvorrichtung 19 verbundene Zylinderkurbelgehäuse 2 ist entsprechend zu dem Bearbeiten der Zylinderbohrungen 26 an dem Tragelement 20 fixiert. Durch das Ausrichten und Fixieren des Zylinderkurbelgehäuses 2 fluchtet die Kurbelwellenbohrung 40 mit der Führungs-Öffnung 42 des Führungselements 41. Das Zylinderkurbelgehäuse 2 ist mittels der Antriebsmotoren 22 derart um die Schwenkachse 23 verschwenkt, dass die Kurbelwellenbohrung 40 der Werkzeugspindel 12 und dem darin aufgenommen Bearbeitungswerkzeug 43 zugewandt ist, also das Führungselement 41 der Werkzeugspindel 12 abgewandt ist. Das Bearbeitungswerkzeug 43 wird mittels der Schlitten 6, 9 in der x- und der y-Richtung relativ zu der Kurbelwellenbohrung 40 positioniert. Das Bearbeitungswerkzeug 43 wird durch Verfahren der Positioniervorrichtung 16 in der z-Richtung in die Kurbelwellenbohrung 40 eingeführt, bis das freie Ende des Bearbeitungswerkzeugs 43 in der Führungs-Öffnung 42 gelagert ist. Das Bearbeitungswerkzeug 43 ist somit beidseitig, also in der Werkzeugaufnahme 13 und der Führungs-Öffnung 42 gelagert. Die Kurbelwellenbohrung 40 wird durch Drehantreiben des Bearbeitungswerkzeugs 43 bearbeitet.

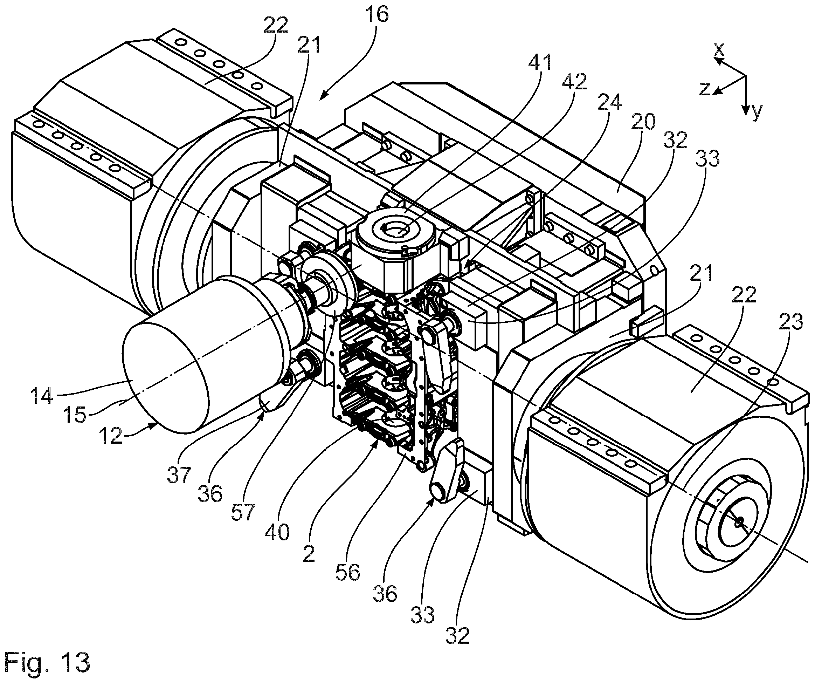

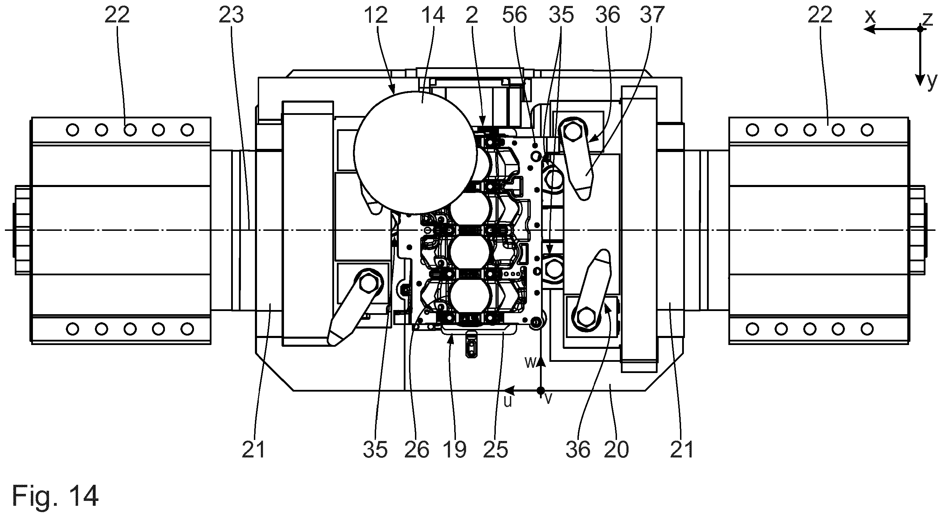

In den Fig. 13 und 14 ist das Bearbeiten der Ölwannen-Dichtfläche 56 mittels eines dritten Bearbeitungswerkzeugs 57 veranschaulicht. Das Zylinderkurbelgehäuse 2 liegt gegen die Auflageflächen 33 der Auflageelemente 32 an und ist mittels der Hilfsvorrichtungs-Spanneinheiten 35 an dem Tragelement 20 fixiert. Hierzu sind die Spannelemente 37 der Hilfsvorrichtungs-Spanneinheiten 35 in die Nuten 53, 54 der Hilfsvorrichtung 19 eingeschwenkt und derart in Richtung der Schwenkachsen 38 verlagert, dass die Spannelemente 37 gegen die Spannflächen 55 anliegen und das Zylinderkurbelgehäuse 2 gegen die Auflageelemente 32 drücken. Die Zylinderkurbelgehäuse-Spanneinheiten 36 sind gelöst und die Spannelemente 37 derart ausgeschwenkt, dass die Ölwannen-Dichtfläche 56 frei liegt.

Zum Bearbeiten der Ölwannen-Dichtfläche 56 wird das Zylinderkurbelgehäuse 2 mittels der Antriebsmotoren 22 derart um die Schwenkachse 23 verschwenkt, dass die Ölwannen-Dichtfläche 56 dem Bearbeitungswerkzeug 57 zugewandt ist. Die Positioniervorrichtung 16 wird in der z-Richtung solange verfahren, bis das Bearbeitungswerkzeug 57 in Kontakt mit der Ölwannen-Dichtfläche 56 ist. Zum Bearbeiten der Ölwannen-Dichtfläche 56 wird das Bearbeitungswerkzeug 57 mittels der Schlitten 6, 9 verfahren.

Die Erfindung ermöglicht somit ein einfaches und wirtschaftliches Bearbeiten von Zylinderkurbelgehäusen 2 derart, dass die Zylinderbohrungen 26, die Kurbelwellenbohrung 40 und die Ölwannen-Dichtfläche 56 sukzessive bearbeitet werden können, ohne dass das mit der Hilfsvorrichtung 19 verbundene Zylinderkurbelgehäuse 2 an der Positioniervorrichtung 16 bzw. dem Tragelement 20 neu oder anders ausgerichtet werden muss. Der Werkzeugwechsel kann in üblicher Weise automatisiert mittels eines Werkzeugwechslers und eines zugehörigen Werkzeugmagazins erfolgen.

## Patentansprüche

1. Positioniervorrichtung für ein Zylinderkurbelgehäuse mit
- einem Tragelement (20) zum Tragen eines mit einer Hilfsvorrichtung (19) verbundenen und zu bearbeitenden Zylinderkurbelgehäuses (2),
- mindestens einem elektrischen Antriebsmotor (22) zum Verschwenken des Tragelements (20) um eine Schwenkachse (23), wobei
- das Tragelement (20) eine Bearbeitungs-Durchgangsöffnung (25) für ein Bearbeitungswerkzeug (27) zum Bearbeiten mindestens einer Zylinderbohrung (26) des Zylinderkurbelgehäuses (2) aufweist, und
- zum Befestigen des mit der Hilfsvorrichtung (19) verbundenen Zylinderkurbelgehäuses (2) an dem Tragelement (20) mindestens eine Spanneinheit (35, 36) angeordnet ist, wobei zum Spannen des Zylinderkurbelgehäuses (2) an einer Ölwannenseite an dem Tragelement (20) mindestens eine Zylinderkurbelgehäuse-Spanneinheit (36) angeordnet ist,
**dadurch gekennzeichnet,**
**dass** zum Spannen der Hilfsvorrichtung (19) an mindestens einer Spannfläche (55) an dem Tragelement (20) mindestens eine Hilfsvorrichtungs-Spanneinheit (35) angeordnet ist.

2. Positioniervorrichtung nach Anspruch 1, **dadurch gekennzeichnet, dass** zum Ausrichten des mit der Hilfsvorrichtung (19) verbundenen Zylinderkurbelgehäuses (2) in einer ersten Richtung (u) und/oder einer zweiten Richtung (w) an dem Tragelement (20), insbesondere an mindestens einem Auflageelement (32), mindestens ein Ausrichtelement (30, 31) angeordnet ist.

3. Positioniervorrichtung nach Anspruch 1 oder 2, **dadurch gekennzeichnet,**
**dass** zum Aufliegen des Zylinderkurbelgehäuses (2) an dem Tragelement (20) mindestens ein Auflageelement (32) angeordnet ist.

4. Positioniervorrichtung nach einem der Ansprüche 1 bis 3, **dadurch gekennzeichnet,**
**dass** die mindestens eine Spanneinheit (35, 36) ein Spannelement (37) aufweist, das senkrecht zu dem Tragelement (20) verlagerbar ist und/oder das parallel zu dem Tragelement (20) verschwenkbar ist.

5. Positioniervorrichtung nach einem der Ansprüche 1 bis 4, **dadurch gekennzeichnet,**
**dass** an dem Tragelement (20) ein Führungselement (41) mit einer Führungs-Öffnung (42) für ein Bearbeitungswerkzeug (43) zum Bearbeiten einer Kurbelwellenbohrung (40) des Zylinderkurbelgehäuses (2) angeordnet ist.

6. Hilfsvorrichtung zum Bearbeiten eines Zylinderkurbelgehäuse mit
- einer Grundplatte (44), in der zum Bearbeiten mindestens einer Zylinderbohrung (26) des Zylinderkurbelgehäuses (2) mindestens eine Durchgangsöffnung (47) ausgebildet ist,
- mehreren Befestigungselementen (48) zur Befestigung der Grundplatte (44) an dem Zylinderkurbelgehäuse (2),
**dadurch gekennzeichnet,**
**dass** zum Zusammenwirken mit mindestens einer Hilfsvorrichtungs-Spanneinheit (35) einer Positioniervorrichtung (16) an der Grundplatte (44) mindestens eine Spannfläche (55) ausgebildet ist, und
**dass** die mindestens eine Spannfläche (55) seitlich an der Grundplatte (44) mittels mindestens einer Nut (53, 54) ausgebildet ist.

7. Hilfsvorrichtung nach Anspruch 6, **dadurch gekennzeichnet,**
**dass** an der Grundplatte (44) mindestens zwei Spannflächen (55) ausgebildet sind, die relativ zu der mindestens einen Durchgangsöffnung (47) gegenüberliegend angeordnet sind.

8. Werkzeugmaschine zum Bearbeiten eines Zylinderkurbelgehäuses mit
- einem Maschinengestell (3),
- einer an dem Maschinengestell (3) angeordneten Positioniervorrichtung (16) für ein Zylinderkurbelgehäuses (2) nach einem der Ansprüche 1 bis 5,
- einer Werkzeugspindel (12) zum Bearbeiten des Zylinderkurbelgehäuses (2) mit einem Bearbeitungswerkzeug (27, 43, 57), wobei die Werkzeugspindel (12) relativ zu der Positioniervorrichtung (16) in drei Richtungen linear verfahrbar ist.

9. Verfahren zum Bearbeiten eines Zylinderkurbelgehäuses mit folgenden Schritten:
- Bereitstellen eines zu bearbeitenden Zylinderkurbelgehäuses (2), das mindestens eine Zylinderbohrung (26) aufweist,
- Bereitstellen einer Hilfsvorrichtung (19) für das Zylinderkurbelgehäuse (2), die mindestens eine Durchgangsöffnung (47) aufweist,
- Befestigen der Hilfsvorrichtung (19) an einer Zylinderkopfseite des Zylinderkurbelgehäuses (2),
- Anordnen des mit der Hilfsvorrichtung (19) verbundenen Zylinderkurbelgehäuses (2) auf einem Tragelement (20) einer Positioniervorrichtung (16) derart, dass die mindestens eine Durchgangsöffnung (47) im Bereich einer Bearbeitungs-Durchgangsöffnung (25) des Tragelements (20) positioniert ist,
- Bearbeiten der mindestens einen Zylinderbohrung (47) mittels eines Bearbeitungswerkzeugs (27) durch die Bearbeitungs-Durchgangsöffnung (25) und die mindestens eine Durchgangsöffnung (47), wobei bei dem Bearbeiten der mindestens einen Zylinderbohrung (26) und/oder bei einem Bearbeiten einer Kurbelwellenbohrung (40) das Zylinderkurbelgehäuse (2) gespannt ist, und
- Bearbeiten einer Ölwannenseite des Zylinderkurbelgehäuses (2), wobei bei dem Bearbeiten der Ölwannenseite die Hilfsvorrichtung (19) gespannt ist, so dass die Ölwannenseite freiliegt.

10. Verfahren nach Anspruch 9, **gekennzeichnet durch** das Bearbeiten der Ölwannenseite des Zylinderkurbelgehäuses (2) mittels eines Bearbeitungswerkzeugs (57) und/oder das Bearbeiten der Kurbelwellenbohrung (40) des Zylinderkurbelgehäuses (2) mittels eines Bearbeitungswerkzeugs (43) mit Hilfe einer Führungs-Öffnung (42) eines Führungselements (41), das an dem Tragelement (20) angeordnet ist.

## Claims

1. Positioning device for a cylinder crankcase with
- a supporting element (20) for supporting a cylinder crankcase (2) connected to an auxiliary device (19) and to be processed,
- at least one electric drive motor (22) for pivoting the supporting element (20) about a pivot axis (23),
wherein
- the supporting member (20) has a processing passage opening (25) for a processing tool (27) for processing at least one cylinder bore (26) of the cylinder crankcase (2), and
- at least one clamping unit (35, 36) is arranged on the supporting element (20) for fastening the cylinder crankcase (2) connected to the auxiliary device (19), wherein at least one cylinder crankcase clamping unit (36) is arranged on the supporting element (20) for clamping the cylinder crankcase (2) on an oil pan side,
**characterized in**
**that** at least one auxiliary device clamping unit (35) is arranged on at least one clamping surface (55) on the supporting element (20) for clamping the auxiliary device (19).

2. Positioning device according to claim 1, **characterized in that,** for aligning the cylinder crankcase (2) connected to the auxiliary device (19) in a first direction (u) and/or a second direction (w) on the supporting element (20), at least one alignment element (30, 31) is arranged in particular on at least one bearing element (32).

3. Positioning device according to claim 1 or 2, **characterized in that** at least one bearing element (32) is arranged for the cylinder crankcase (2) to bear on the supporting element (20).

4. Positioning device according to any one of claims 1 to 3, **characterized in**
**that** the at least one clamping unit (35, 36) has a clamping element (37) which can be displaced perpendicularly to the supporting element (20) and/or which can be pivoted parallel to the supporting element (20).

5. Positioning device according to any one of claims 1 to 4, **characterized in**
**that** a guiding element (41) with a guiding opening (42) for a processing tool (43) for processing a crankshaft bore (40) of the cylinder crankcase (2) is arranged on the supporting element (20).

6. Auxiliary device for processing a cylinder crankcase with
- a base plate (44) in which at least one passage opening (47) is formed for processing at least one cylinder bore (26) of the cylinder crankcase (2),
- a plurality of fastening elements (48) for fastening the base plate (44) to the cylinder crankcase (2),
**characterized in**
**that** at least one clamping surface (55) is formed on the base plate (44) for interaction with at least one auxiliary device clamping unit (35) of a positioning device (16), and
**that** the at least one clamping surface (55) is formed laterally on the base plate (44) by means of at least one groove (53, 54).

7. Auxiliary device according to claim 6, **characterized in that** at least two clamping surfaces (55) are formed on the base plate (44), which are arranged opposite relative to the at least one passage opening (47).

8. Machine tool for processing a cylinder crankcase with
- a machine frame (3),
- a positioning device (16) arranged on the machine frame (3); for a cylinder crankcase (2) according to any one of claims 1 to 5,
- a tool spindle (12) for processing the cylinder crankcase (2) with a processing tool (27, 43, 57), wherein the tool spindle (12) can be moved linearly in three directions relative to the positioning device (16).

9. Method for processing a cylinder crankcase comprising the following steps:
- providing a cylinder crankcase (2) to be processed, which has at least one cylinder bore (26),
- providing an auxiliary device (19) for the cylinder crankcase (2), which has at least one passage opening (47),
- fastening the auxiliary device (19) to a cylinder head side of the cylinder crankcase (2),
- arranging the cylinder crankcase (2) connected to the auxiliary device (19) on a supporting element (20) of a positioning device (16) in such a way that the at least one passage opening (47) is positioned in the region of a processing passage opening (25) of the supporting element (20),
processing the at least one cylinder bore (47) by means of a processing tool (27) through the processing passage opening (25) and the at least one passage opening (47), wherein during the processing of the at least one cylinder bore (26) and/or during processing of a crankshaft bore (40) the cylinder crankcase (2) is clamped, and
- processing an oil pan side of the cylinder crankcase (2), wherein during the processing of the oil pan side, the auxiliary device (19) is clamped so that the oil pan side is exposed.

10. Method according to claim 9, **characterized by** processing the oil pan side of the cylinder crankcase (2) by means of a processing tool (57) and/or processing the crankshaft bore (40) of the cylinder crankcase (2) by means of a processing tool (43) with the aid of a guiding opening (42) of a guiding element (41) arranged on the supporting element (20).

## Revendications

1. Dispositif de positionnement pour un carter de vilebrequin de cylindre avec
- un élément porteur (20) pour supporter un carter de vilebrequin de cylindre (2) relié à un dispositif auxiliaire (19) et devant être usiné,
- au moins un moteur d'entraînement électrique (22) pour faire pivoter l'élément porteur (20) autour d'un axe de pivotement (23),
dans lequel
- l'élément porteur (20) présente une ouverture de passage d'usinage (25) pour un outil d'usinage (27) destiné à usiner au moins un alésage de cylindre (26) du carter de vilebrequin de cylindre (2), et
- pour fixer le carter de vilebrequin de cylindre (2) relié au dispositif auxiliaire (19), au moins une unité de serrage (35, 36) est disposée sur l'élément porteur (20), au moins une unité de serrage de carter de vilebrequin de cylindre (36) étant disposée sur l'élément porteur (20) pour serrer le carter de vilebrequin de cylindre (2) sur un côté de carter d'huile,
**caractérisé en ce**
**qu'**au moins une unité de serrage de dispositif auxiliaire (35) est disposée sur au moins une surface de serrage (55) sur l'élément porteur (20) pour serrer le dispositif auxiliaire (19).

2. Dispositif de positionnement selon la revendication 1, **caractérisé en ce**
**que,** pour aligner le carter de vilebrequin de cylindre (2) relié au dispositif auxiliaire (19) dans une première direction (u) et/ou une deuxième direction (w) sur l'élément porteur (20), en particulier sur au moins un élément d'appui (32), au moins un élément d'alignement (30, 31) est disposé.

3. Dispositif de positionnement selon la revendication 1 ou 2, **caractérisé en ce**
**qu'**au moins un élément d'appui (32) est disposé pour l'appui du carter de vilebrequin de cylindre (2) sur l'élément porteur (20).

4. Dispositif de positionnement selon l'une quelconque des revendications 1 à 3, **caractérisé en ce**
**que** ladite au moins une unité de serrage (35, 36) présente un élément de serrage (37) qui peut être déplacé perpendiculairement à l'élément porteur (20) et/ou qui peut pivoter parallèlement à l'élément porteur (20).

5. Dispositif de positionnement selon l'une quelconque des revendications 1 à 4, **caractérisé en ce**
**qu'**un élément de guidage (41) avec une ouverture de guidage (42) pour un outil d'usinage (43) destiné à usiner un alésage de vilebrequin (40) du carter de vilebrequin de cylindre (2) est disposé sur l'élément porteur (20).

6. Dispositif auxiliaire destiné à usiner un carter de vilebrequin de cylindre avec
- une plaque de base (44) dans laquelle au moins une ouverture de passage (47) est formée pour usiner au moins un alésage de cylindre (26) du carter de vilebrequin de cylindre (2),
- une pluralité d'éléments de fixation (48) pour fixer la plaque de base (44) sur le carter de vilebrequin de cylindre (2),
**caractérisé en ce**
**que,** pour coopérer avec au moins une unité de serrage de dispositif auxiliaire (35) d'un dispositif de positionnement (16), au moins une surface de serrage (55) est formée sur la plaque de base (44), et **que** ladite au moins une surface de serrage (55) est formée latéralement sur la plaque de base (44) au moyen d'au moins une rainure (53, 54).

7. Dispositif auxiliaire selon la revendication 6, **caractérisé en ce qu'**au moins deux surfaces de serrage (55) sont formées sur la plaque de base (44), qui sont disposées en face par rapport à ladite au moins une ouverture de passage (47).

8. Machine-outil destinée à usiner un carter de vilebrequin de cylindre avec
- un bâti de machine (3),
- un dispositif de positionnement (16) d'un carter de vilebrequin de cylindre (2) selon l'une quelconque des revendications 1 à 5, disposé sur le bâti de machine (3),
- une broche porte-outil (12) destinée à usiner le carter de vilebrequin de cylindre (2) avec un outil d'usinage (27, 43, 57), la broche porte-outil (12) pouvant être déplacée linéairement dans trois directions par rapport au dispositif de positionnement (16).

9. Procédé d'usinage d'un carter de vilebrequin de cylindre comprenant les étapes suivantes :
- fournir un carter de vilebrequin de cylindre (2) à usiner, qui présente au moins un alésage de cylindre (26),
- fournir un dispositif auxiliaire (19) pour le carter de vilebrequin de cylindre (2), qui présente au moins une ouverture de passage (47),
- fixer le dispositif auxiliaire (19) sur un côté de la tête du cylindre du carter de vilebrequin de cylindre (2),
- disposer le carter de vilebrequin de cylindre (2) relié au dispositif auxiliaire (19) sur un élément porteur (20) d'un dispositif de positionnement (16) de telle sorte que l'au moins une ouverture de passage (47) soit positionnée dans la zone d'une ouverture de passage d'usinage (25) de l'élément porteur (20),
- usiner ledit au moins un alésage de cylindre (47) au moyen d'un outil d'usinage (27) à travers l'ouverture de passage d'usinage (25) et ladite au moins une ouverture de passage (47), dans lequel, lors de l'usinage dudit au moins un alésage de cylindre (26) et/ou lors d'un usinage d'un alésage de vilebrequin (40), le carter de vilebrequin de cylindre (2) est serré, et
- usiner un côté de carter d'huile du carter de vilebrequin de cylindre (2), dans lequel, lors de l'usinage du côté de carter d'huile, le dispositif auxiliaire (19) est serré de sorte que le côté de carter d'huile est exposé.

10. Procédé selon la revendication 9, **caractérisé par** l'usinage du côté de carter d'huile du carter de vilebrequin de cylindre (2) au moyen d'un outil d'usinage (57) et/ou l'usinage de l'alésage de vilebrequin (40) du carter de vilebrequin de cylindre (2) au moyen d'un outil d'usinage (43) à l'aide d'une ouverture de guidage (42) d'un élément de guidage (41) qui est disposé sur l'élément porteur (20).
